Europäisches Patentamt

European Patent Office

Office européen des brevets

(19)

(11) Veröffentlichungsnummer: **0 006 976**
**B1**

(12) **EUROPÄISCHE PATENTSCHRIFT**

(45) Veröffentlichungstag der Patentschrift: **03.02.82**

(51) Int. Cl.³: **F 16 D 59/00, B 66 B 5/18**

(21) Anmeldenummer: **79101212.3**

(22) Anmeldetag: **23.04.79**

(54) **Fangbremse für Aufzüge und Seilbahnen.**

(30) Priorität: **27.04.78 DE 2818600**

(43) Veröffentlichungstag der Anmeldung:
**23.01.80 Patentblatt 80/2**

(45) Bekanntmachung des Hinweises auf die Patenterteilung:
**03.02.82 Patentblatt 82/5**

(84) Benannte Vertragsstaaten:
**BE CH DE FR GB IT LU NL SE**

(56) Entgegenhaltungen:
**DE - B - 1 506 473**
**FR - A - 2 088 016**
**US - A - 3 559 773**
**US - A - 3 674 119**
**US - A - 3 870 129**

(73) Patentinhaber: **Söll Kommanditgesellschaft Industrieschmiede**
**Seligenweg 10**
**D-8670 Hof (DE)**

(72) Erfinder: **Fränkel, Manfred**
**Breslaustrasse 2**
**D-8670 Hof (DE)**

(74) Vertreter: **Abitz, Walter, Dr.-Ing. et al,**
**Abitz, Morf, Gritschneder P.O. Box 86 01 09**
**D-8000 München 86 (DE)**

Courier Press, Leamington Spa, England.

Fangbremse für Aufzüge und Seilbahnen

Die Erfindung betrifft eine Fangbremse für Aufzüge, Seilbahnen und dergleichen, die beim Reissen des Hub- oder Antriebsseiles, beim Versagen des Getriebes oder des Antriebsmotors eine ungebremste Abwärtsfahrt der Gondel oder des Aufzugs verhindert.

Entsprechend dem Oberbegriff des Anspruches 1 wird die Gondel oder der Aufzug bei Überschreiten einer bestimmten Umdrehungszahl einer Getriebewelle abbebremst. Die Fangbremse besitzt einen Geschwindigkeitsbegrenzer in Form eines Fliehkraftreglers mit Fliehgewichten, der auf der abzubremsenden Getriebewelle befestigt ist, eine Bremsglocke, die den Geschwindigkeitsbegrenzer umgibt, an der die Fliehgewichte des Geschwindigkeitsbegrenzers bei Überschreiten einer bestimmten Umdrehungszahl angreifen und due in einem Gehäuse drehbar gelagert ist, eine Einrichtung zur axialen Verschiebung der Bremsglocke und eine Abbremseinrichtung zum Abbremsen der Getriebewelle, wenn die Bremsglocke axial verschoben wird. Aus der DEB 1 506 473 ist eine derartige Fangbremse bekannt, wobei die Fliehbewichte formschlüssig an der Innenseite der Bremsglocke angreifen und versetzen diese dadurch in Drehung. Die Einrichtung zur axialen Verschiebung der Bremsglocke besteht aus einer Spindel mit einer gegen Drehund gesicherten Spindelhülse, durch die die Bremsglocke, wenn sie durch Einfallen des Fliehkraftreglers in Drehung versetzt wird, gegen ein feststehendes Bremselement gedrückt und dadurch abgebremst wird. Da die Bremskraft über die Fliehgewichte auf die Gebriebewelle übertragen wird, hängt die Betriebssicherheit der Fangbremse von dem formschlüssigen Eingriff der Fliehbewichte ab. Die für den Formschluss verantwortlichen Kanten der Fliehgewichte können während des Eingriffvorganges teilweise ausbrechen, wodurch der formschlüssige Eingriff erschwert wird. Die Bremskraft nimit ausserdem während des Bremsvorganges stetig zu. Um einen kurzen Bremsweg zu erreichen, muss die Abbremskraft daher an Ende bes Bremsvorganges sehr hoch sein, wodurch die Aufzugführung und alle tragenden Teile sehr stark belastet werden.

Aus der FR—A—2 088 016 ist eine axial wirkende Lastdruckbremse bekannt, die zur axialen Verschiebung von Bremsscheiben zwei zueinander komplementäre Spiralscheiben aufweist. Die Lastdruckbremse soll verhindern, dass beim Abschalten einer Antreibseinheit die Last unter ihrem eingenen Gewicht durchfällt, und wird durch das dem Antriebsdrehmoment entgegengerichtete Drehmoment der Last ausgelöst.

Die Aufgabe der Erfindung besteht in einer Fangbremse, die innerhalb eines sehr engen Drehzahlbereiches der Getriebewelle zuverlässig anspricht und bei der der gesamte Bremsvorgang mit im wesentlichen konstanter Bremskraft bzw. Verzögerung durchgeführt wird.

Diese Aufgabe wird entsprechend dem kennzeichnenden Teil des Anspruches 1 dadurch gelöst, dass die Fliehgewichte kraftschlüssig an die Innenseite einer Bremsglocke angreifen und die Getriebewelle unmittelbar durch eine auf ihr befestigte Bremsscheibe abgebremst wird, wobei der Boden der Bremsglocke als feststehendes Bremselement dient, nachdem die Bremsglocke zum Stillstand gekommen ist, nachdem die durch die Fliehkraftbremse in Drehung versetzt worden ist und axial verschoben worden ist.

Vorzugsweise ist eine Einrichtung vorgesehen, durch die die Bremsglocke in ihrer Ruhestellung gegen Drehund gesichert ist, solange das von der Fliehkraftbremse erzeugte Drehmoment einer bestimmten Wert nicht überschreitet. Vorzugsweise ist ferner eine Einrichtung vorgesehen, um den Betrag der Drehung der Bremsglocke und damit die Bremskraft zu begrenzen.

Ausführungsbeispiele der Erfindung werden nachfolgend an Hand der Zeichnung näher beschrieben. Es zeigen:

Fig. 1 eine Fangbremse im Längsschnitt;
Fig. 2 einen Schnitt nach 2—2 von Fig. 1;
Fig. 3 eine der zur axialen Verschiebung der Bremsglocke dienenden konischen Spiralscheiben in perspektivischer Darstellung;
Fig. 4 eine Ausführungsform der Fangbremse mit Fangschalter und Begrenzung des Betrags der Drehung der Bremsglocke;
Fig. 5 Details der Bremsscheibe und
Fig. 6 in perspektivischer Darstellung eine Bremsglocke.

Die Fangbremse ist über die Getriebewelle 1 mit einem Schnecken- oder Stirnradgetriebe verbunden, das die normale Fahrgeschwindigkeit des Aufzuges von zum Beispiel 0,2 m/sec auf zum Beispiel 1400 U/min der Getriebewelle übersetzt. Dieses Schnecken- oder Stirnradgetriebe ist unabhängig von der Treibeinheit des Aufzuges oder der Gondel. Die Getriebewelle 1 wird über das Schneckenoder Stirnradgetriebe zum Beispiel durch ein Zahnrad angetrieben, das in eine Lochschiene eingreift, die an der Führung des Aufzuges befestigt ist.

Die Fangbremse besteht im wesentlichen aus einem Geschwindigkeitsbegbrenzer 2 und einer Bremsscheibe 3, die beide auf der Getriebewelle 1 sitzen, wobei die Bremsscheibe 3 fest auf der Getriebewelle 1 sitzt, während der Geschwindigkeitsbegrenzer 2 axial verschiebbar ist, aus einer Bremsglocke 4, die den Geschwindigkeitsbegrenzer 2 und die Bremsscheibe 3 umgibt, zwei konischen Spiralscheiben 5 und einem Gehäuse 6, das die gesamte Fangbremse umgibt. Von den konischen Spiralscheiben ist eine an der Stirnseite der Bremsglocke 4 und die andere am Boden des Gehäuses 6 befestigt.

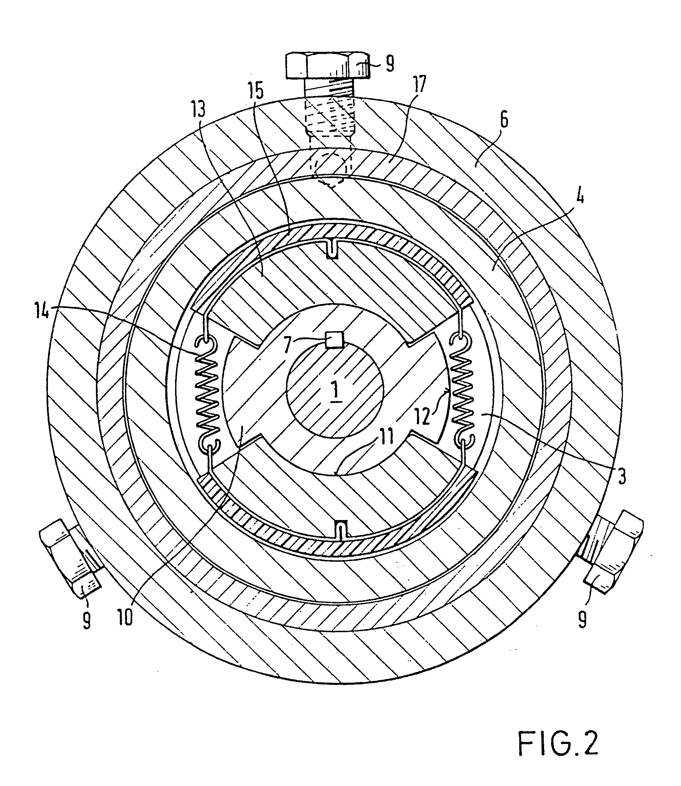

Der Geschwindigkeitsbegrenzer 2 ist im einzelnen in Fig. 2 dargestellt. Der Geschwindigkeitsbegrenzer weist eine Profilnabe 10 auf, die auf der Getriebewelle 1 sitzt und über einen Mitnehmerkeil 7 von der Getriebewelle in Drehung versetzt wird, jedoch axial verschiebbar ist. Durch Tellerfedern 20 wird der Geschwindigkeitsbegrenzer 2 von dem Getriebedeckel 8 des Schnecken- oder Stirnradgetriebes weggedrückt. Die Profilnabe 10 weist im Querschnitt zwei einander gegenüberliegende Bereiche 11 von verringertem Radius und zwei einander gegenüberliegende Bereiche 12 von vergrössertem Durchmesser auf. Beim Übergang von einem Bereich 11 von verringertem Durchmesser zu einem Bereich 12 von vergrössertem Durchmesser wird jeweils eine radial verlaufende Stufe gebildet. Der Geschwindigkeitsbegrenzer 2 weist ferner Fliehgewichte 13 auf, die durch Zugfedern 14 gehalten werden und an den Bereichen 11 von verringertem Durchmesser anliegen. In Fig. 2 sind zwei Zugfedern 14 dargestellt, die an beiden Fliehgewichten befestigt sind. Die Fliehgewichte haben den Querschnitt von Ringsegmenten. Die Aussenfläche jedes Fliehgewichts 13 ist mit einem Bremsbelag 15 versehen.

Der Geschwindigkeitsbegrenzer 2 wirkt als Fliehkraftbremse. Die Profilnabe 10 und die durch die Zugfedern 14 gegen die Profilnabe gedrückten Fliehgewichte 13 werden durch die Getriebewelle 1 in Drehung versetzt. Die Zugkraft der Federn ist so bemessen, dass sie bei normaler Fahrgeschwindigkeit grösser ist als die durch die Fliehgewichte 13 ausgeübte Fliehkraft. Bei normaler Fahrgeschwindigkeit liegen die Fliehgewichte 13 an den Bereichen 11 verringerten Durchmessers der Profilnabe an. Bei Überschreitung der normalen Fahrgeschwindigkeit wird die von den Fliehgewichten 13 ausgeübte Fliehkraft grösser als die Zugkraft der Zugfedern 14 und entfernen sich dadurch die Fliehgewichte 13 von der Profilnabe 10. Die Bremsbeläge 15 der Fliehgewichte 13 greifen dadurch am Innenumfang der Bremsglocke 4 an und versetzen diese in Drehbewegung.

Auf der Getriebewelle 1 ist ferner eine Bremsscheibe 3 befestigt. Die Befestigung erfolgt zweckmässigerweise ebenfalls durch den Mitnehmerkeil 7. Im Gegensatz zum Geschwindigkeitsbegrenzer 2 ist die Bremsscheibe 3 nicht axial verschiebbar. Die Bremsscheibe 3 ist am Ende der Getriebewelle 1 befestigt und hat die Form eines Zylinders. Der Durchmesser der Bremsscheibe 3 entspricht dem Durchmesser des Geschwindigkeitsbegrenzers 2, der durch die Bremsbeläge 15 festgelegt ist, oder ist etwas geringer als dieser.

Der Geschwindigkeitsbegrenzer 2 und die Bremsscheibe 3 werden in geringem Abstand von einer Bremsglocke 4 umgeben. Die Bremsglocke 4 hat die Form eines auf einer Seite offenen Hohlzylinders. Von der geschlossenen Seite des Zylinders ist ein sogenannter Wellenkopf 16 nach aussen weggeführt. Wenn die Bremsglocke 4 über die Bremsscheibe 3 auf den Geschwindigkeitsbegrenzer 2 geschoben wird, so fluchtet der Wellenkopf 16 axial mit der Getriebewelle 1.

Die Bremsglocke 4 wird wiederum von einem Gehäuse 6 umgeben, das ebenfalls die Form eines auf einer Seite offenen Hohlzylinders besitzt. Das Gehäuse 6 der Fangbremse ist fest mit dem Aufzug oder der Gondel verbunden, zum Beispiel mit dem Getriebedeckel 8 des Schnecken- oder Stirnradgetriebes. Die Bremsglocke 4 ist drehbar innerhalb des Gehäuses 6 gelagert. Die Lagerung erfolgt am offenen Ende der Bremsglocke 4 durch einen Gleitring 17, der am Innenumfang des Gehäuses 6 angeordnet ist und am geschlossenen Ende der Bremsglocke 4 durch den Wellenkopf 16, der sich durch eine mittige Öffnung des geschlossenen Endes des Gehäuses 6 erstreckt und in dieser Öffnung drehbar gelagert ist. Das aus dem Gehäuse herausstehende Ende des Wellenkopfes 16 ist in geeigneter Weise zum Ansetzen eines Hebels ausgebildet, indem es zum Beispiel als Vieroder Sechskant ausgebildet ist oder mit radialen Bohrungen versehen ist.

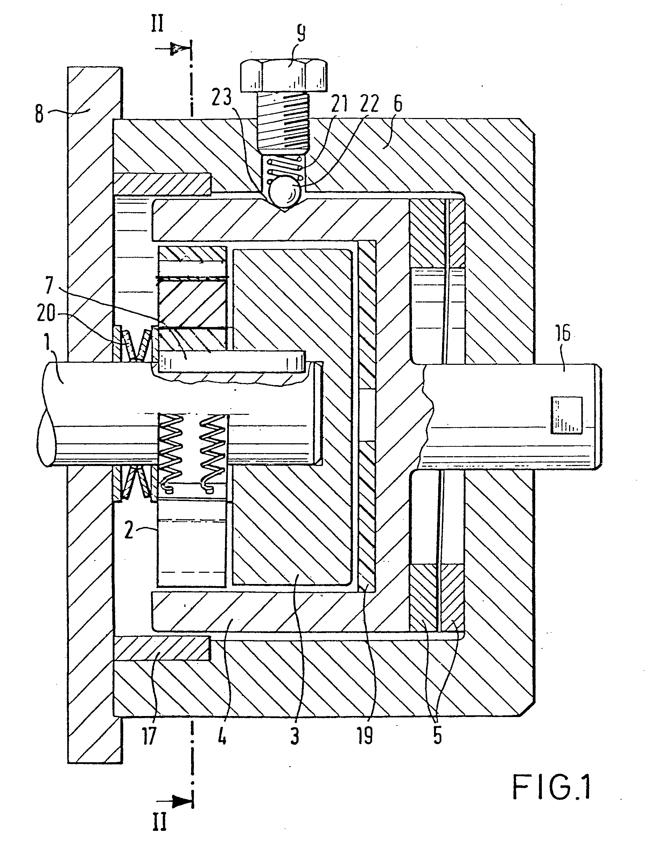

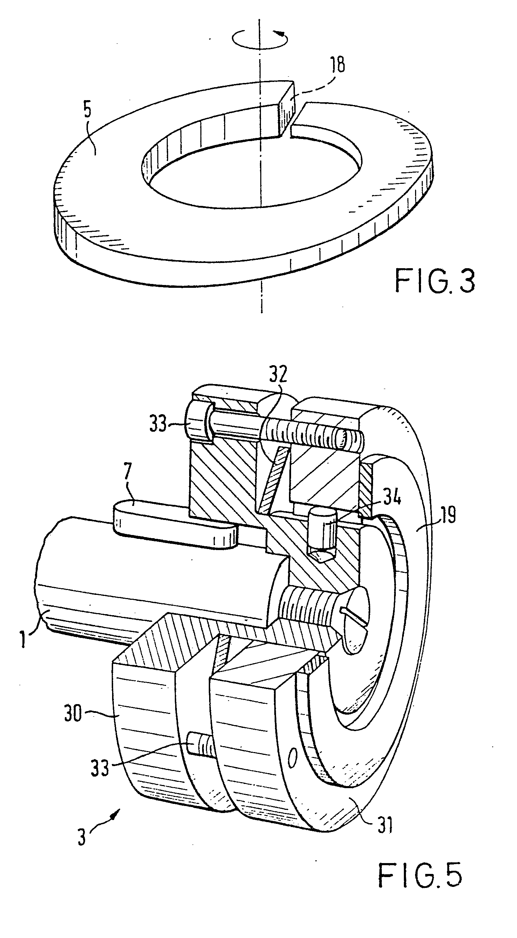

Zwischen der Bremsglocke 4 und dem Gehäuse 6 befinden sich zwei konische Spiralscheiben 5, von denen die eine aussen an der das geschlossene Ende der Bremsglocke 4 bildenden Fläche befestigt ist und die andere innen am Boden des Gehäuses 6. Der Aussendruchmesser der konischen Spiralscheiben entspricht zweckmässigerweise dem Aussendurchmesser der Bremsglocke 4. Fig. 3 zeigt ein Beispiel einer konischen Spiralscheibe, wie sie für die vorliegende Erfindung verwendet werden kann. Die Dicke der konischen Spiralscheiben nimmt auf dem Umfang gleichmässig zu. Zwischen den Stellen kleinster und grösster Dicke wird eine Stufe 18 gebildet. Die konischen Spiralscheiben sind jeweils mit ihrer flachen Seite, also der Seite, die keine Stufe besitzt, an der Bremsglocke 4 bzw. dem Gehäuse 6 befestigt. Mann kann sich die konischen Spiralscheiben als einen flachen Keil vorstellen, dessen beide Enden zueinander gebogen wurden, so dass sich eine flache, kreisförmige Scheibe ergibt. Die konischen Spiralscheiben können als geschlossener Ring oder als Ring mit einer schmalen Unterbrechung zwischen den Stellen kleinster und grösster Dicke ausgebildet sein. Beide konischen Spiralscheiben sind zueinander Komplementär, das heisst der Zunahme der Dicke der einen Spiralscheibe entspricht eine gleichgrosse Verringerung der Dicke der anderen Spiralscheibe. Die Richtung, in der sich die Dicke der an der Bremsglocke 4 befestigten Spiralscheibe verringert, entspricht dabei der Drehrichtung der Getriebewelle 1 bei Abwärtsfahrt der Gondel oder des Aufzugs. Im normalen Betrieb liegen die konischen Spiralscheiben aneinander, und zwar so, dass die Stirnflächen der Stufe 18 aneinander anstossen. Wird die Bremsglocke in der Richtung gedreht, in der sich die Getriebewelle 1 bei Abwärtsfahrt des Aufzuges bewegt, diese Richtung ist in Fig. 3 durch einen Pfeil angedeutet, wobei angenommen wird, dass die in Fig. 3 dargestellte konische Spiralscheibe an der Bremsglocke 4 befestigt ist, so wird die Bremsglocke 4 in Fig. 1 nach links gedrückt, das heisst vom Boden des Gehäuses 6 weg und zur Bremsscheibe 3 hin. Die ebene Innenseite der Bremsglocke 4 ist mit einem Bremsbelag 19 versehen und der axiale Abstand zwischen dem Bremsbelag 19 und der Bremsscheibe 3 beträgt weniger als die Höhe der Stufe 18 und vorzugsweise wenigen als die Hälfte der Höhe der Stufe 18. Aus Sicherheitsgründen wird es bevorzugt, dass dieser axiale Abstand einem Viertel der Höhe der Stufe 18 entspricht. Unter Höhe der Stufe 18 wird dabei die Differenz zwichen der grössten und der kleinsten Dicke einer konischen Spiralscheibe 5 verstanden. Dadurch wird erreicht, dass sich die Bremsglocke 4 um nicht mehr als eine Umdrehung drehen kann bzw. in bevorzugten Ausführungsformen eine halbe bzw. viertel Umdrehung drehen kann und ferner durch die nach einer bzw. nach einer viertel Umdrehung feststehende Bremsglocke 4 die Bremsscheibe 3 und damit über die Getriebewelle 1 und das an der Zahnstange angreifende Zahnrad der Aufzug abgebremst wird.

Nachfolgend wird die Betriebsweise der Beschriebenen Fangbremse im Zusammenhang beschrieben. Wird bei Ausfall der Antriebseinheit oder Reissen des Hubseils eine bestimmte Abwärtsgeschwindigkeit überschritten und wird dadurch die Umdrehungsgeschwindigkeit der Getriebewelle 1 so gross, dass die an den Fliehgewichten 13 angreifende Kraft grösser ist als die Kraft der Zugfedern 14, so werden die Fliehgewichte 13 von der Getriebewelle 1 weg und radial nach aussen gedrückt Die Fliehgewichte 13, die zugleich die Funktion von Bremsbacken haben, greifen dadurch am Innenumfang der Bremsglocke 4 an und versetzen diese in Drehung. Infolge der Wirkung der konischen Spiralscheibe 5 wird die Bremsglocke durch ihre Drehung in Richtung zur Bremsscheibe 3 verschoben. Die Bremsglocke 4 verschiebt dabei infolge der an ihr angreifenden Bremsbeläge 15 der Fliehgewichte 13 ihrerseits den axial verschiebbaren Geschwindigkeitsbegrenzer 2 gegen die Kraft der Tellerfedern 20. Nach einer relativ geringen Drehung kommt die Bremsglocke 4 zum Stillstand, da für eine weitere Drehung der axiale Abstand zwischen dem Bremsbelag 19 auf der Innenseite der Bremsglocke und der Bremsscheibe 3 zu gering ist. Aufgrund ihrer Konizität schieben die Spiralscheiben 5 die Bremsglocke 4 nicht nur in Richtung zur Bremsscheibe 3, sondern drücken die Bremsglocke 4 gleichzeitig auf der Bremsscheibe 3 fest. Die Bremsscheibe 3 wird durch die zum Stillstand gekommene Bremsglocke 4 rasch abgebremst, wodurch der Aufzug oder die Gondel zum Stillstand kommt.

Sobald die bestimmte Geschwindigkeit unterschritten wird, lösen sich die Bremsbeläge 15 von der Bremsglocke 4 und wird der Geschwindigkeitsbegrenzer von den Tellerfedern 20 wieder in seine Ruhestellung gedrückt.

Soll die Gondel oder der Aufzug wieder in Bewegung gesetzt werden, muss vorher mit einem Hebel, der am Ende des Wellenkopfes 16 angesetzt wird, die Bremsglocke entarretiert werden. Die zur Entarretierung der Bremsglocke efforderliche Drehbewegung ist dabei dem Weg entgegengesetzt, den die Bremsglocke beim Bremsvorgang zurückgelegt hat. Das Lösen der Fangbremse kann auch durch gegenläufige Fahrt geschehen.

Es sind ferner Einrichtungen vorgesehen, die eine zufällige Drehung der Bremsglocke 4 und eine zufällige Verschiebung der Bremsglocke 4 zur Bremsscheibe 3 hin verhindern. Diese Einrichtung kann aus einer einem Schnappverschluss ähnlichen Arretierung bestehen, die durch Anwendung einer relativ geringen Kraft gelöst werden kann. Die Arretierung kann aus einer in ein Gewindeloch des Gehäuses 6 eingedrehten Einstellschraube 9 bestehen, die über eine Schraubendruckfeder 21 eine Kugel 22 in eine flache, kegelstumpfförmige Aussparung 23 der Bremsglocke 4 drückt. Zweckmässigerweise sind mehrere derartige Arretiervorrichtungen auf dem Umfang des Gehäuses 6 in gleichen Abständen angeordnet.

Die Bremsbeläge 15 und 19 sind handelsübliche Kunststoff-Bremsbeläge.

Der Gleitring 17 soll vorzugsweise aus Bronze bestehen. Alle übrigen Teile können aus Stahl gefertigt werden.

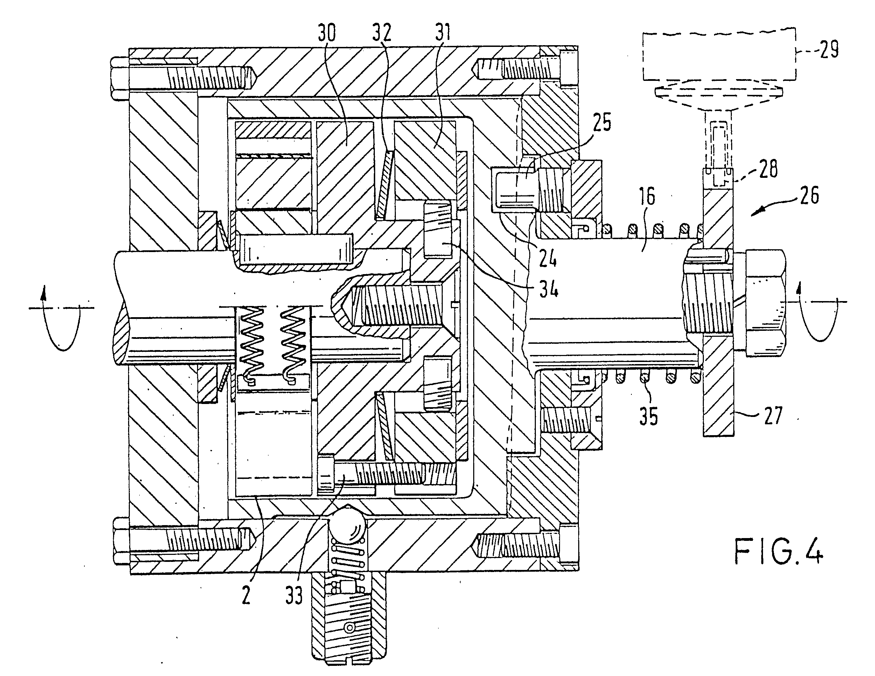

Die Figuren 4, 5 und 6 zeigen eine Ausführungsform der Fangbremse, bei der mittels einer Anschlagschraube 25, die in ein Langloch 24 auf der ebenen Aussenseite der Bremsglocke 4 eingreift, die Bremskraft einstellbar ist. In Fig. 4 ist ausserdem eine Fangschaltung 26 gezeigt.

Die Anschlagschraube 25 sitzt in einem Gewindeloch im Boden des Gehäuses 6 und ragt ein kurzes Stück in das Innere des Gehäuses 6 hinein. Die Anschlagschraube 25 greift in ein Langloch 24 ein, das an der ebenen Aussenseite der Bremsglocke 4 in dem inneren, nicht von der konischen Spiralscheibe 5 abgedeckten Bereich vorgesehen ist. Das Langloch 24 ist entsprechend einer Kreislinie gekrümmt und erstreckt sich über einen be stimmten Winkel. Durch den Eingriff zwischen Anschlagschraube 25 und Langloch 24 wird die Drehbewegung der Bremsglocke 4 und damit die maximale axiale Verschiebung der Bremsglocke 4 begrenzt. Da die Bremskraft von dem Betrag der axialen Verschiebung der Bremsglock 4 abhängt, wird dadurch gleichzeitig auch die Bremskraft begrenzt. Eine Einstellung der Bremskraft ist durch Veränderung der Länge bzw. des Bogenmasses des Langloches 24 möglich.

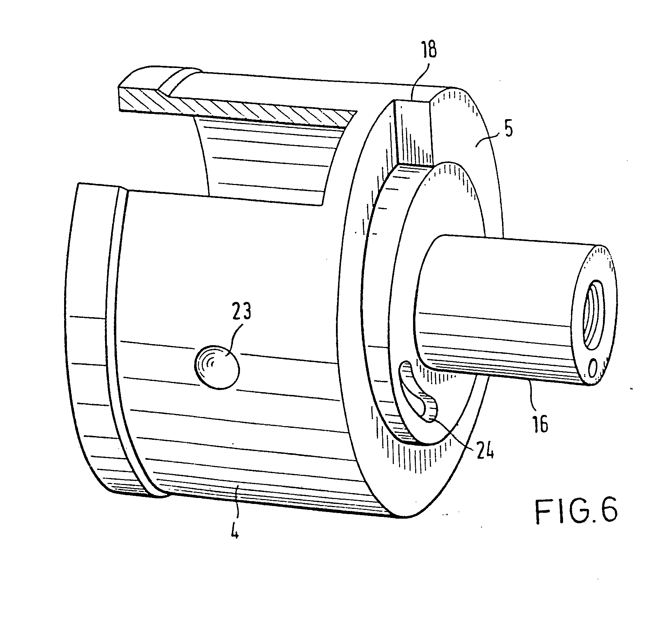

Bei der in den Figures 4 und 6 gezeigten Ausführungsform sind die konischen Spiralscheiben 5 keine getrennten Bauteile, sondern einteilig mit der Bremsglocke 4 bzw. dem Deckel des Gehäuses 6 ausgeführt. Das Langloch 24 erstreckt sich im allgemeinen nicht durch den Boden der Bremsglocke 4 hindurch.

Es genügt, wenn das Langloch 24 eine ausreichende Tiefe besitzt, um einen sicheren Eingriff zwischen Anschlagschraube 25 und Langlock 24 zu ermöglichen.

Wie in Fig. 4 und 5 gezeigt, ist bei dieser Ausführungsform die Bremsscheibe 3 aus mehreren Teilen so aufgebaut, dass der Bremsbelag 19, der bei dieser Ausführungsform nicht am Boden der Bremsglocke 4, sondern an der Bremsscheibe angebracht ist, gleichmässig am Boden der Bremsglocke 4 angreift. Die Bremsscheibe 3 besteht dazu aus einer auf der Getriebe Welle festgelegte Nabe 30 mit einem axialen Ansatz, auf dem axial verschiebbar eine ringförmige Bremsbelaghalterung 31 sitzt, die den Bremsbelag 19 trägt. Die Bremsbelaghalterung 31 wird durch eine Feder, zum Beispiel eine Tellerfeder 32, von der Nabe 30 weggedrückt. Durch geeignete Mittel, zum Beispiel Schrauben 33, wird der maximale Abstand der Bremsbelaghalterung 31 von der Nabe 30 festgelegt. Die Schrauben 33 sitzen in der Bremsbelaghalterung 31 und führen durch Bohrungen in der Nabe 30, wobei sie in diesen Bohrungen verschiebbar sind.

Die Tellerfeder 32 steht unter Vorspannung und erzeugt die Kraft, mit der die Bremsbelaghalterung 31 gegen die Bremsglocke 4 gedrückt wird, so dass das entstehende Bremsmoment von der Vorspannung und der Kennlinie der Tellerfeder 32 abhängt. Daneben hängt das Bremsmoment, wie erwähnt, jedoch auch von dem Bogenmass des Langloches 24 bzw, dem Betrag der axialen Verschiebung der Bremsglocke 4 ab, der gleich dem Hubweg der Tellerfeder 32 plus dem Abstand der ebenen Innenseite der Bremsglocke 4 von der Bremsscheibe 3 bzw. der Bremsbelaghalterung 31 im Ruhezustand ist.

Die Tellerfeder 32 stellt ausserdem sicher, dass die Fangbremse nach dem Abbremsvorgang den Aufzug hält und der Aufzug nicht etwa infolge einer kleinen Verkantung der Bremsglocke 4 gegenüber der Getriebewelle 1 oder einer Exzentrizität abstatweise abwärtsrutscht oder "abwärtsstottert".

Durch Bolzen 34 wird die Drehbewegung der Nabe 30 auf die Bremsbelaghalterung 31 übertragen. In Fig. 4 sind zwei Bolzen 34 gezeigt. Die Anzahl der Bolzen 34 wird so gewählt, dass sie das beim Abbremsen entstehende Drehmoment auf die Nabe 30 übertragen können. Die Bolzen 34 sitzen in Sackbohrungen auf dem Umfang des Ansatzes der Nabe 30 und greifen in Langsnuten auf der Innenseite der Bremsbelaghalterung 31 ein. Die Nabe 30 ist an dem Wellenstumpf der Getriebewelle 1 festgeschraubt und überträgt die Bremskraft durch einen Mitnehmerkeil 7 auf diese.

Durch die in den Figuren 4 und 5 gezeigte Ausbildung der Bremsscheibe 3 wird ein weiches Ansprechen der Fangbremse unter der Wirkung der eingestellten Bremskraft erreicht.

Die Fangschaltung 26 kann aus einer Kurvenscheibe 27 bestehen, durch die über einen Rollenstössel 28 ein Endschalter 29 betätigt wird, der die Stromzufuhr zum Motor des Aufzugs oder der Gondel underbricht. Die Kurvenscheibe 27 ist an dem aus dem Gehäuse 6 herausragenden Wellenkopf 16 der Bremsglocke 4 befestigt und dreht sich daher mit der Bremsglocke 4. Der Endschalter 29 und die Kurvenscheibe 27 sind so ausgebildet, dass beim Einrückender Fangbremse, das heisst be Drehung der Bremsglocke 4 entsprechend dem Bogenmass des Langloches 24 durch den Endschalter 29 die Stromzufuhr zum Getriebemotor unterbrochen wird.

Im übrigen ist der Aufbau und die Funktion der in den Figuren 4 bis 6 gezeigten Ausführungsform so wie bei der Ausführungsform der Figuren 1 bis 3.

Das Lösen der Fangbremse kann durch gegenläufige Fahrt geschehen. Die auf dem Bremsbelag festsitzende Bremsglocke 4 erfährt dadurch einen Drehimpuls, der sie in ihre Ausgangsstellung zurückbringt, wobei der Drehimpuls ausreicht, die Bremsglocke vollständig in ihre Grundstellung, bei der die Kugel 22 in die Aussparung 23 einrastet, zu bringen, nachdem sich die Bremsglocke 4 von dem Bremsbelag 19 gelöst hat. Die axiale Verschiebung der Bremsglocke 4 von der Bremsscheibe 3 weg wird hierbei durch den von der Tellerfeder 32 erzeugten Impuls bewirkt. Sobald die Grundstellung der Fangbremse erreicht ist, ist auch gleichzeitig über die Fangschaltung 26 die Stromzufuhr zu dem Antriebsmotor wieder hergestellt.

Zwischen der Kurvenscheibe 27 und dem Deckel des Gehäuses 6 kann noch eine Druckfeder 35 vorgesehen sein, die die Bremsglocke von der Bremsscheibe 3 wegdrückt, das heisst die beiden konischen Spiralscheiben geringfügig gegeneinander drückt, und die Bremsglocke 4 in der Ruhelage stabilisiert. Beim Öffen der Fangbremse durch gegenläufige Fahrt schlagen nämlich die Stufen 18 der konischen Spiralscheiben 5 mit hoher Geschwindigkeit aufeinander und kann es eintreten, dass die Bremsglocke 4 dadurch wieder aus der Stellung gerissen wird, die durch das Zusammenwirken der Schraubendruckfeder 21, der Kugel 22 und der Aussparung 23 gesichert werden soll. Die Druckfeder 35 soll das Aufeinanderschlagen der Stufen 18 dämpfen und dadurch die Bremsglocke 4 stabilisieren. Der Aufpralleffekt tritt allerdings nur bei hohen Drehzahlen der Getriebewelle 1 auf. Besitzt die Getriebewelle bei der normalen Geschwindigkeit eines Aufzugs eine Drehzahl von etwa 500 U/min, so ist der Aufprall zwischen den Stufen 18 so klein, dass eine Druckfeder 35 nich notwendig ist. Bei höheren Drehzahlen von zum Beispiel 1000 U/min oder darüber ist es jedoch zweckmässig, die Druckfeder 35 vorzusehen, um die Fangbremse nach völliger Öffnung auch in dieser Stellung halten zu können. Selbstverständlich darf die Druckfeder 35 nicht so stark sein, dass sie beim Einrücken der Fangbremse der Axialverschiebung der Bremsglocke 4 eine wesentliche Kraft entgagensetzt und der Tellerfeder 32 entgegenwirkt.

Bei der Ausführungsform der Figuren 4 bis 6 ist nur ein einziges Langloch 24 und eine einzige Anschlagschraube 25 vorgesehen. In der ebenen Aussenseite der Bremsglocke 4 können jedoch auch mehrere Langlöcher vorgesehen sein, die den gleichen oder verschiedenen Abstand von der Längsachse der Fangbremse besitzen können. Für jedes Langloch 24 ist dann in dem Boden des Gehäuses 6 ein Gewindeloch für eine mit dem Langloch zusammenwirkende Anschlagschraube 25 vorgesehen. Besitzen die verschiedenen Langlöcher ein unterschiedliches Bogenmass, sas heisst eine unterschiedliche Länge, so hängt der Drehwinkel der Bremsglocke 4 davon ab, in welches Gewindeloch die Anschlagschraube 25 eingeschraubt wird. Die Langlöcher 24 müssen ausserdem nicht auf der ebenen Aussenseite der Bremsglocke 4 vorgesehen sein, sie können auch auf der zylindrischen Aussenfläche der Bremsglocke 4 vorgesehen sein.

Alle Bauteile der Fangbremse werden durch geeignete Verfahren gegen Korrosion geschützt, vorzugsweise durch Verkupfern, anschliessendes Aufbringen eines Cadmiumüberzugs durch Elektroplattieren, elektrolytische Abscheidung aus cyanidhaltigen Cadmiumsalzlösungen, mit Hilfe von Cadmiumanoden oder durch Vakuumbedampfung und schliesslich Chromatieren (DIN 50 902). Durch den Cadmiumüberzug wird gleichzeitig die Reibung vermindert innerhalb der Gleitpassungen für die Glocke, zwischen den Spiralscheiben und zwischen der Kupplungsscheibe und der Bremsbelaghalterung.

Die Fangbremse eignet sich zum Abbremsen von Getriebewellen sowohl mit sehr hohen Drehzahlen von bis zu 10 000 pro Minute oder mehr als auch mit sehr kleinen Drehzahlen von zum Beispiel nur 3 Umdrehungen pro Minute. Vorzugsweise ist das Schnecken- oder Stirnradgetriebe, mit dem die Getriebewelle 1 verbunden ist, so ausgelegt, dass die Getriebewelle 1 bei normaler Arbeitsgeschwindigkeit des Aufzugs oder der Gondel eine Drehzahl zwischen 300 und 1500 U/Min besitzt. Bei Drehzahlen unterhalb 300 pro Minute lässt sich die Auslösedrehzahl des Geschwindigkeitsbegrenzers nicht mehr genau einstellen. Bei höheren Drehzahlen zeichnet sich die Fangbremse jedoch dadurch aus, dass die Auslösedrehzahl mit einer Genauigkeit von ±1,25% eingehalten wird. Die Fangbremse ist unempfindlich gegen Stösse und es besteht zum Beispiel nicht die Gefahr, dass durch einen kräftigen Stoss die Fangbremse ausgelöst wird, obwohl die Auslösedrehzahl der Getriebewelle 1 nicht erreicht ist.

Die Fangbremse spricht sehr rasch an und die sogenannte Totzeit (Zeit bis zur vollen Bremskraft) beträgt weniger als 0,1 Sekunden. Bei Ausfall eines Teils der Fangbremse wird bereits durch den Geschwindigkeitsbegrenzer 2 allein ein freier Fall des Aufzugs verhindert, da die Drehzahl der Getriebewelle durch den Geschwindigkeitsbegrenzer 2 die Auslösedrehzahl, das ist die Drehzahl, bei der die Fliehgewichte 13 durch die Fliehkraft die Kraft der Zugfedern 14 überwinden, nicht wesentlich überschreiten kann.

## Patentansprüche

1. Fangbremse zum Abbremsen der Getriebewelle einer Gondel oder eines Aufzugs bei Überschreiten einer bestimmten Umdrehungszahl der Getriebewelle (1), mit einem Geschwindigkeitsbegrenzer in Form einer Fliehkraftbremse mit Fliehgewicht (13), der auf der abzubremsenden Getriebewelle (1) befestigt ist, mit einer Bremsglocke (4), die den Geschwindigkeitsbegrenzer umgibt, an der die Fliehgewichte (13) des Geschwindigkeitsbegrenzers bei Überschreiten einer bestimmten Geschwindigkeit angreifen und die in einem Gehäuse (6) drehbar gelagert ist, mit einer Einrichtung zur axialen Verschiebung der Bremsglocke (4) und zum Begrenzen der Drehung der Bremsglocke und mit einer Abbremseinrichtung zum Abbremsen der Getriebewelle (1), wenn die Bremsglocke (4) axial verschoben wird, dadurch gekennzeichnet, dass die Fliehgewichte (13) mittels Bremsbelägen (15) an der Bremsglocke (4) angreifen und diese in Drehbewegung versetzen, dass die Einrichtung zur axialen Verschiebung der Bremsglocke (4) und zum Begrenzen der Drehung der Bremsglocke (4) zwei zueinander komplementäre, konische Spiralscheiben (5) aufweist, von denen die eine am Boden des Gehäuses (6) befestigt oder einteilig mit dem Gehäuse (6) ausgebildet ist, und die andere an der Stirnseite der Bremsglocke (4) befestigt oder einteilig damit ausgebildet ist, wobei die Dicke der an der Bremsglocke (4) befestigten oder einteilig damit ausgegbildeten Spiralscheibe (5) in Drehrichtung der Getriebewelle (1) bei Abwärtsfahrt des Aufzuges gleichmässig abnimmt und zwischen der Stelle kleinster und grösster Dicke eine Stufe (18) gebildet wird, dass der axiale Abstand zwischen der Bremsscheibe (3) und der ebene Innenseite der Bremsglocke (4) kleiner ist als die Höhe der Stufe (18) der konischen Spiralscheiben (5), dass die Abbremseinrichtung eine Bremsscheibe (3) ist, die am Ende der Getriebewelle (1) befestigt ist und die gegen die innere Bodenseite der Bremsglocke (4) wirkt.

2. Fangbremse nach Anspruch 1, dadurch gekennzeichnet, dass die Bremsglocke (4) durch eine am Umfang des Gehäuses (6) eingeschraubte Einstellschraube (9), die über eine Schraubendruckfeder (21) eine Kugel (22) in eine Aussparung (23) in der zylindrischen Aussenfläche der Bremsglocke (4) drückt, mit relative geringer Kraft in ihrer Ruhestellung gehalten wird.

3. Fangbremse nach einem der Ansprüche 1 bis 2, dadurch gekennzeichnet dass die Einrichtung zur axialen Verschiebung der Bremsglocke (4) und zum Begrenzen der Drehung der Bremsglocke ferner ein Langloch (24) oder eine längliche Aussparung in der Aussenseite der Bremsglocke (4) und eine mit dem Langloch (24) in Eingriff stehende Anschlagschraube (25) aufweist, die in dem Gehäuse (6) befestigt ist, so dass der Betrag der Drehung der Bremsglocke (4) beim Eingreifen der Fangbremse durch das Bogenmass des Langloches (24) bzw. der länglichen Aussparung bestimmt wird.

4. Fangbremse nach einem der Ansprüche 1 bis 3, dadurch gekennzeichnet, dass die Bremsglocke (4) mit einer Fangschaltung (26) verbunden ist, die bei Drehung der Bremsglocke (4) aus der Ruhestellung in die Eingriffstellung die Antriebseinrichtung des Aufzuges abschaltet.

5. Fangbremse nach einem der Ansprüche 1 bis 4, dadurch gekennzeichnet dass die Bremsscheibe (3) eine auf der Welle festgelegte Nabe (30) mit einem axialen Ansatz aufweist, auf dem eine axial verschieb bar oder drehgesiechert ringförmige Bremsbelaghalterung (31) sitzt, die den Bremsbelag (19) trägt und sich durch eine Feder (32) gegen die Nabe (30) abstützt.

## Claims

1. A safety brake for decelerating the transmission shaft of a cable car or an elevator when a predetermined speed of rotation of the transmission shaft (1) is exceeded, comprising a speed limiter in the form of a centrifugal brake with centrifugal weights (13) mounted on the transmission shaft (1) to be decelerated, a brake bell (4) which surrounds the speed limiter and is engaged by the centrifugal weights (13) of the speed limiter when a predetermined speed is exceeded, and which is mounted for rotation in a housing (6), a means for axial displacement of the brake bell (4) and for limiting the rotation of the brake bell, and a decelerating means for decelerating the transmission shaft (1) when the brake bell (1) is axially displaced, characterized in that the centrifugal weights (13) engage the brake bell (4) by means of brake linings (15) and thus set the brake bell in rotation, in that the means for axial displacement of the brake bell (4) and for limiting the rotation of the brake bell (4) comprises two mutually complementary conical spiral discs (5), one of which is mounted on the bottom of the housing (6) or formed integrally with the housing (6) and the other one is mounted on the front face of the brake bell (4) or formed integrally therewith, the thickness of the spiral disc (5) mounted on or formed integrally with the brake bell (4) decreasing uniformly in the direction of rotation of the transmission shaft (1) during downward travel of the elevator and a step (18) being formed between the points of minimum and maximum thickness, in that the axial spacing between the brake disc (3) and the planar inner side of the brake bell (4) is smaller than the height of the step (18) of the conical spiral discs (5), and in that the decelerating means is a brake disc (3) mounted on the end of the transmission shaft (1) and acting against the inner bottom face of the brake bell (4).

2. The safety brake according to Claim 1, characterized in that the brake bell (4) is held in its inoperative position by the exertion of a relatively small force by an adjusting screw (9) received in the periphery of the housing (6), said adjusting screw—via a helical compression spring (21)—urging a ball (22) into a recess (23) in the cylindrical outer surface of the brake bell (4).

3. The safety brake according to any one of Claims 1 to 2, characterized in that the means for axial displacement of the brake bell (4) and for limitation of the rotation of the brake bell furthermore comprises a slot (24) or an elongated recess in the outer surface of the brake bell (4) and a stop screw (25) engaging the slot (24), said stop screw being fastened in the housing (6) such that the amount or rotation of the brake bell (4) until engagement by the safety brake is determined by the arc measure of the slot (24) or the elongated recess.

4. The safety brake according to any one of Claims 1 to 3, characterized in that the brake bell (4) is connected to a safety circuit mechanism (26) which switches off the drive means of the elevator when the brake bell (4) is rotated out of its inoperative position into the engaging position.

5. The safety brake according to any one of Claims 1 to 4, characterized in that the brake disc (3) comprises a hub (30) fixedly mounted on the shaft and having an axial extension on which an annular brake lining support (31) is mounted for axial displacement or for rotation therewith, which carries the brake lining (19) and bears against the hub (30) by way of a spring (32).

## Revendications

1. Dispositif de retenue pour ascenseurs et funiculaires, agissant par freinage sur un arbre d'entraînement (1) lorsque la vitesse de rotation de celui-ci dépasse une valeur critique prédéterminée; ce dispositif comportant un limiteur de vitesse constitué par un frein centrifuge, pourvu de masselottes centrifuges (13), et solidaire de l'arbre d'entraînement (1) à freiner, et une cloche de freinage (4) entourant le limiteur de vitesse, sur laquelle viennent en prise les masselottes centrifuges (13) du limiteur de vitesse, en cas de dépassement de la vitesse de rotation prédéterminée de l'arbre d'entraînement; la cloche de freinage (4) étant montée rotativement dans un carter (6); le dispositif comportant des moyens pour commander un coulissement axial de la cloche de freinage (4), et pour limiter la rotation de celle-ci, et des moyens de freinage pour freiner l'arbre d'entraînement (1) lorsque la cloche de freinage (4) coulisse axialement; le dispositif étant caractérisé en ce que les masselottes centrifuges (13) agissent sur la cloche de freinage (4) au moyen de garnitures de friction (15), pour provoquer la rotation de la cloche; en ce que les moyens, prévus pour commander le coulissement axial de la cloche de freinage (4) et pour limiter la rotation de celle-ci, comportent deux rondelles coniques hélicoïdales complémentaires (5), dont l'une est fixée au fond du carter (6) ou fait partie intégrante de celui-ci, tandis que l'autre rondelle est fixée à la face frontale de la cloche de freinage (4) ou fait partie intégrante de celle-ci; la rondelle hélicoïdale (6), fixée à la cloche de freinage (4) ou faisant partie intégrante de celle-ci, présente une épaisseur qui décroit régulièrement dans le sens de rotation de l'arbre d'entraînement (1) qui correspond à un mouvement de descente de l'ascenseur; et cette rondelle présente un décrochement axial (18) entre ses parties de plus forte épaisseur et de plus faible épaisseur; en ce que les moyens de freinage sont constitués par un disque de freinage (3) fixé à l'extrêmité de l'arbre d'entraînement (1), et coopérant avec la face interne du fond de la cloche de freinage (4); et en ce que le jeu axial existant au repos entre le disque de freinage (3) et la face interne plate de la cloche de freinage (4) est inférieur à la hauteur du décrochement axial (18) des rondelles coniques hélicoïdales.

2. Dispositif suivant la revendication 1, caractérisé en ce que la cloche de freinage (4) est maintenue en position de repos, sous un effort relativement limité, par une vis réglable (9) vissée dans la périphérie du carter (6), solli-cjtant une bille (22) par l'intermédiaire d'un ressort hélicoïdal d'appui (21), tendant à enfoncer la bille dans un évidement (23) ménagé dans la surface cylindrique externe de la cloche de freinage (4).

3. Dispositif suivant la revendication 1 ou 2, caractérisé en ce que les moyens, prévus pour commander le coulissement axial de la cloche de freinage (4) et pour limiter la rotation de cette cloche, comportent en outre un trou allongé (24) ou une découpure allongée, ménagée dans la face externe de la cloche de freinage (4), et une vis de butée (25) fixée au carter (6) et engagée dans le trou allongé (24), de telle manière que l'amplitude de la rotation de la cloche de freinage (4) au moment du passage en position d'arrêt du dispositif est déterminée par l'ouverture angulaire, correspondant au trou allongé (24) ou à la découpure allongée.

4. Dispositif suivant une des revendications 1 à 3, caractérisé en ce que la cloche de freinage (4) est associée à un système d'actionnement (26) d'un commutateur d'arrêt, qui coupe l'alimentation du moteur de l'ascenseur, lorsque la cloche de freinage (4) tourne pour s'écarter de sa position de repos et pour venir en position d'arrêt.

5. Dispositif suivant une des revendications 1 à 4, caractérisé en ce que le disque de freinage (3) comporte un moyeu (30) fixé à l'arbre et pourvu d'un prolongement axial et une monture annulaire (31), qui porte la garniture de freinage (31) et que peut coulisser axialement sur le prolongement du moyeu, en étant solidaire de celui-ci en rotation, cette monture étant en appui contre le moyeu (3) par l'intermédiaire d'un ressort (32).

FIG.1

FIG.2

FIG. 3

FIG. 5

FIG.4

FIG.6